(19) Europäisches Patentamt / European Patent Office / Office européen des brevets

(11) **EP 4 685 002 A1**

(12) **EUROPEAN PATENT APPLICATION**

(43) Date of publication:
**28.01.2026  Bulletin 2026/05**

(21) Application number: **25169057.4**

(22) Date of filing: **08.04.2025**

(51) International Patent Classification (IPC):
**B60L 15/20** (2006.01)  **B60L 3/10** (2006.01)

(52) Cooperative Patent Classification (CPC):
**B60L 15/20; B60L 3/106;** B60L 2200/12;
B60L 2240/12; B60L 2240/421; B60L 2240/423;
B60L 2250/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **25.07.2024  JP 2024119472**

(71) Applicant: **Yamaha Hatsudoki Kabushiki Kaisha
Iwata-shi, Shizuoka 438-8501 (JP)**

(72) Inventors:
• **MIYASHIRO, Shidehiko
  Shizuoka, 4388501 (JP)**
• **KAMIYA, Hiroyuki
  Shizuoka, 438-0026 (JP)**

(74) Representative: **Studio Torta S.p.A.
Via Viotti, 9
10121 Torino (IT)**

(54) **STRADDLED ELECTRIC VEHICLE**

(57)    A straddled electric vehicle (1) includes an electric motor (5) and a rear wheel (9). The rear wheel (9) is driven by rotation of the electric motor (5). Furthermore, the straddled electric vehicle (1) includes an accelerator position sensor (13), a rotation sensor (15), a speed sensor (14), and a controller (20). The accelerator position sensor (13) detects an operation amount (AP) of an accelerator grip (7). The rotation sensor (15) detects a rotation speed (R) of the electric motor (5). The speed sensor (14) detects a speed (V) of the straddled electric vehicle (1). The controller (20) controls torque of the electric motor (5) based on the operation amount (AP) of the accelerator grip (7), the rotation speed (R) of the electric motor (5), and the speed (V) of the straddled electric vehicle (1).

FIG.2

## Description

Technical Field

The present invention relates to a straddled electric vehicle.

Prior Art

WO 2012/157013 discloses an electric motorcycle. The electric motorcycle includes an accelerator operation amount sensor, an ECU, an electric motor, and a drive wheel. The accelerator operation amount sensor detects an accelerator operation amount. The ECU receives the accelerator operation amount detected by the accelerator operation amount sensor. The ECU controls an output of the electric motor according to the accelerator operation amount. The electric motor drives the drive wheel. As a result, for example, when the accelerator operation amount increases, the electric motorcycle is in an acceleration state.

When a straddled vehicle is traveling, there is a case where a drive wheel float from a road surface due to unevenness of the road surface. When the drive wheel floats from the road surface, the drive wheel spins. When the drive wheel spins, an excessive driving force is converted into a rotational energy of the drive wheel and the rotation speed of the drive wheel increases, and thus the drive wheel may rotate at a high speed. When the straddled vehicle is in an acceleration state, the rotation speed of the drive wheel at the time of spinning further increases.

In a case where the drive wheel is driven by an electric motor, it is easy to increase the rotation speed of the drive wheel at the time of spinning. This is because in the case where the drive wheel is driven by the electric motor, resistance to rotation of the drive wheel is relatively small.

For example, an engine generates a pumping loss. The friction with respect to the rotation of the engine is relatively large. The pumping loss and the friction are the resistance to the rotation of the drive wheel. Thus, in a case where the drive wheel is driven by the engine, the resistance to the rotation of the drive wheel is relatively large. Therefore, in the case where the drive wheel is driven by the engine, the rotation speed of the drive wheel at the time of spinning is relatively less likely to increase. On the other hand, the electric motor does not generate a pumping loss. The friction with respect to the rotation of the electric motor is relatively small. Thus, in a case where the drive wheel is driven by the electric motor, the resistance to the rotation of the drive wheel is relatively small. Therefore, in the case where the drive wheel is driven by the electric motor, the rotation speed of the drive wheel at the time of spinning is relatively likely to increase.

In the case where the drive wheel is driven by the electric motor, it may be easier to increase the rotation speed of the drive wheel at the time of spinning. This is because the drive wheel may be driven by the electric motor without a transmission.

For example, in the case where the drive wheel is driven by the engine, the drive wheel is driven by the engine via the transmission. The transmission limits the rotation speed of the drive wheel to a certain level or less. The transmission is, for example, a five-speed or six-speed transmission. When the transmission is shifted to the first speed or the second speed, the rotation speed of the drive wheel is limited to a sufficiently small level. Therefore, in the case where the drive wheel is driven by the engine, the rotation speed of the drive wheel at the time of spinning is relatively less likely to increase. On the other hand, in the case where the drive wheel is driven by the electric motor, the drive wheel may be driven by the electric motor without the transmission. **In** a case where the drive wheel is driven by the electric motor without the transmission, the rotation speed of the drive wheel is not limited. Therefore, in the case where the drive wheel is driven by the electric motor, the rotation speed of the drive wheel at the time of spinning may be relatively likely to increase.

The present invention has been made in view of such circumstances, and an object of the present invention is to provide a straddled electric vehicle that can easily suitably control the rotation speed of the drive wheel.

Description of the invention

**In** order to achieve such an object, the present invention has the following configuration.

That is, the present invention is a straddled electric vehicle including:

> an electric motor;
> a drive wheel driven by rotation of the electric motor;
> an accelerator position sensor that detects an operation amount of an accelerator;
> a rotation sensor that detects a rotation speed of the electric motor;
> a speed sensor that detects a speed of the straddled electric vehicle; and
> a controller that controls torque of the electric motor based on the operation amount of the accelerator, the rotation speed of the electric motor, and the speed of the straddled electric vehicle.

The straddled electric vehicle includes the electric motor and the drive wheel. The drive wheel is driven by the rotation of the electric motor. Furthermore, the straddled electric vehicle includes the accelerator position sensor, the rotation sensor, the speed sensor, and the controller. The accelerator position sensor detects the operation amount of the accelerator. The rotation sensor detects the rotation speed of the electric motor. The speed sensor detects the speed of the straddled electric vehicle. The controller controls the torque of the electric motor based on the operation amount of the accelerator, the rotation speed of the electric motor, and the speed of the straddled electric vehicle. Therefore, it is easy to suitably control the rotation speed of the drive wheel. For example, an increase amount of the rotation speed of the drive wheel when the drive wheel floats from the road surface can be reduced. Even when the drive wheel spins, for example, the rotation speed of the drive wheel does not become excessively high. For example, the rotation speed of the drive wheel at the time of spinning does not rapidly increase.

**In** the straddled electric vehicle described above, it is preferable that the controller include a memory that stores information defining a relationship among the operation amount of the accelerator, the rotation speed of the electric motor, the speed of the straddled electric vehicle, and a torque command value.

The controller includes the memory. The memory stores the information. The information defines the relationship among the operation amount of the accelerator, the rotation speed of the electric motor, the speed of the straddled electric vehicle, and the torque command value. Therefore, it is easy for the controller to acquire the torque command value. The controller controls the electric motor with the torque command value. For example, the controller controls the torque of the electric motor so as to be equal to the torque command value. Therefore, it is easy for the controller to control the torque of the electric motor based on the operation amount of the accelerator, the rotation speed of the electric motor, and the speed of the straddled electric vehicle.

In the straddled electric vehicle described above, it is preferable that:

the information set the torque command value when the operation amount is a first operation amount, the rotation speed is a first rotation speed, and the speed is a first speed to a first torque command value;
the information set the torque command value when the operation amount is the first operation amount, the rotation speed is the first rotation speed, and the speed is a second speed to a second torque command value;
the first speed be less than the second speed; and
the first torque command value be less than the second torque command value.

A state of the straddled electric vehicle when the operation amount is the first operation amount, the rotation speed is the first rotation speed, and the speed is the first speed is referred to as a "first state" for convenience. When the straddled electric vehicle is in the first state, the controller controls the electric motor with the first torque command value. When the controller controls the electric motor with the first torque command value, the electric motor outputs first torque.

A state of the straddled electric vehicle when the operation amount is the first operation amount, the rotation speed is the first rotation speed, and the speed is the second speed is referred to as a "second state" for convenience. When the straddled electric vehicle is in the second state, the controller controls the electric motor with the second torque command value. When the controller controls the electric motor with the second torque command value, the electric motor outputs second torque.

Here, the first speed is less than the second speed. The first torque command value is less than the second torque command value. As the torque command value decreases, the torque output from the electric motor decreases. Therefore, the first torque is less than the second torque. Thus, in the first state, the rotation speed of the electric motor is relatively less likely to increase. Therefore, the rotation speed of the drive wheel does not become excessively high. Thus, in the first state, the rotation speed of the drive wheel can be appropriately controlled.

The second speed is larger than the first speed. The second torque command value is larger than the first torque command value. As the torque command value increases, the torque output from the electric motor increases. Therefore, the second torque is larger than the first torque. Thus, in the second state, the rotation speed of the electric motor is relatively likely to increase. Therefore, in the second state, the straddled electric vehicle smoothly accelerates. Accordingly, the rotation speed of the drive wheel can be appropriately controlled even in the second state.

In the straddled electric vehicle described above, it is preferable that:

when the electric motor rotates at the first rotation speed, a peripheral speed of the drive wheel be a first peripheral speed;
the first peripheral speed be larger than the first speed; and
a difference between the first peripheral speed and the first speed be larger than a threshold.

Therefore, the difference between the first peripheral speed and the first speed is relatively large. Thus, in the first state, it is presumed that the drive wheel is spinning. As described above, in the first state, the rotation speed of the electric motor is relatively less likely to increase. Therefore, in a case where it is presumed that the drive wheel is spinning, the rotation speed of the drive wheel does not become excessively high. Accordingly, in the case where it is presumed that the drive wheel is spinning, the rotation speed of the drive wheel can be appropriately controlled.

In the straddled electric vehicle described above, it is preferable that a difference between the first peripheral speed and the second speed be less than or equal to the threshold.

Therefore, the difference between the first peripheral speed and the second speed is relatively small. Thus, in the second state, it is presumed that the drive wheel is properly in contact with the road surface. As described above, in the second state, the rotation speed of the electric motor is relatively likely to increase. Therefore, in a case where it is presumed that the drive wheel is properly in contact with the road surface, the straddled electric vehicle smoothly accelerates. Accordingly, in the case where it is presumed that the drive wheel is properly in contact with the road surface, the rotation speed of the drive wheel can be appropriately controlled.

In the straddled electric vehicle described above, it is preferable that:

a first reference value be less than the first rotation speed, and
when the operation amount is the first operation amount and the speed is the first speed, the torque command value decrease as the rotation speed increases in a range larger than the first reference value.

Therefore, when the operation amount is the first operation amount and the speed is the first speed, the torque of the electric motor gradually decreases as the rotation speed increases in the range larger than the first reference value. For example, in a case where the rotation speed is larger than the first reference value, the torque of the electric motor changes relatively slowly. Therefore, it is easy to maintain the comfort of the straddled electric vehicle. Accordingly, in the case where the rotation speed is larger than the first reference value, the rotation speed of the drive wheel can be appropriately controlled.

In the straddled electric vehicle described above, it is preferable that:

a second reference value be larger than the first reference value, and
when the operation amount is the first operation amount and the speed is the first speed, the torque command value decrease as the rotation speed increases in a range larger than the first reference value and less than or equal to the second reference value.

Therefore, when the operation amount is the first operation amount and the speed is the first speed, the torque of the electric motor gradually decreases as the rotation speed increases in the range larger than the first reference value and less than or equal to the second reference value. Thus, the torque of the electric motor changes relatively slowly. Therefore, it is easy to maintain the comfort of the straddled electric vehicle. Accordingly, in the range where the rotation speed is larger than the first reference value and less than or equal to the second reference value, the rotation speed of the drive wheel can be appropriately controlled.

In the straddled electric vehicle described above, it is preferable that a difference between the second reference value and the first reference value be 100 rpm or more.

The second reference value and the first reference value have a relatively large difference. Therefore, when the operation amount is the first operation amount and the speed is the first speed, the torque of the electric motor gradually decreases as the rotation speed increases in the range larger than the first reference value and less than or equal to the second reference value. Thus, it is easier to maintain the comfort of the straddled electric vehicle. Accordingly, in the range where the rotation speed is larger than the first reference value and less than or equal to the second reference value, the rotation speed of the drive wheel can be appropriately controlled.

In the straddled electric vehicle described above, it is preferable that, when the operation amount is the first operation amount, the speed is the first speed, and the rotation speed is larger than or equal to the second reference value, the torque command value be a minimum value.

Therefore, when the operation amount is the first operation amount, the speed is the first speed, and the rotation speed is larger than or equal to the second reference value, the torque of the electric motor is minimum. When the torque of the electric motor is minimum, the rotation speed of the drive wheel is less likely to increase. For example, when the operation amount is the first operation amount, the speed is the first speed, and the rotation speed is larger than or equal to the second reference value, the rotation speed of the drive wheel does not become excessively high. Accordingly, when the operation amount is the first operation amount, the speed is the first speed, and the rotation speed is larger than or equal to the second reference value, the rotation speed of the drive wheel can be appropriately controlled.

In the straddled electric vehicle described above, it is preferable that, when the operation amount is the first operation amount, the speed is the first speed, and the rotation speed is larger than or equal to the second reference value, the torque command value be zero.

Therefore, when the operation amount is the first operation amount, the speed is the first speed, and the rotation speed is larger than or equal to the second reference value, the torque of the electric motor is zero. When the torque of the electric motor is zero, the rotation speed of the drive wheel is less likely to increase. For example, when the operation amount is the first operation amount, the speed is the first speed, and the rotation speed is larger than or equal to the second reference value, the rotation speed of the drive wheel does not become excessively high. Accordingly, when the operation amount is the first operation amount, the speed is the first speed, and the rotation speed is larger than or equal to the second reference value, the rotation speed of the drive wheel can be appropriately controlled.

In the straddled electric vehicle described above, it is preferable that, when the operation amount is the first operation amount, the speed is the first speed, and the rotation speed is larger than or equal to the second reference value, the torque command value be less than zero.

Therefore, when the operation amount is the first operation amount, the speed is the first speed, and the rotation speed is larger than or equal to the second reference value, the torque of the electric motor is less than zero. When the torque of the electric motor is less than zero, the rotation speed of the drive wheel is less likely to increase. For example, when the operation amount is the first operation amount, the speed is the first speed, and the rotation speed is larger than or equal to the second reference value, the rotation speed of the drive wheel decreases. Accordingly, when the operation amount is the first operation amount, the speed is the first speed, and the rotation speed is larger than or equal to the second reference value, the rotation speed of the drive wheel can be appropriately controlled.

In the straddled electric vehicle described above, it is preferable that:

the information set the torque command value when the operation amount is the first operation amount, the rotation speed is the second rotation speed, and the speed is the first speed to a third torque command value;
the information set the torque command value when the operation amount is the first operation amount, the rotation speed is the second rotation speed, and the speed is the second speed to a fourth torque command value;
the first speed be less than the second speed; and
the third torque command value be equal to the fourth torque command value.

A state of the straddled electric vehicle when the operation amount is the first operation amount, the rotation speed is the second rotation speed, and the speed is the first speed is referred to as a "third state" for convenience. When the straddled electric vehicle is in the third state, the controller controls the electric motor with the third torque command value. When the controller controls the electric motor with the third torque command value, the electric motor outputs third torque.

A state of the straddled electric vehicle when the operation amount is the first operation amount, the rotation speed is the second rotation speed, and the speed is the second speed is referred to as a "fourth state" for convenience. When the straddled electric vehicle is in the fourth state, the controller controls the electric motor with the fourth torque command value. When the controller controls the electric motor with the fourth torque command value, the electric motor outputs fourth torque.

The first speed is less than the second speed. The third torque command value is equal to the fourth torque command value. Therefore, the third torque is equal to the fourth torque. Therefore, regardless of whether the straddled electric vehicle is in the third state or the fourth state, the rotation speed of the electric motor is relatively likely to increase. For example, the acceleration performance of the straddled electric vehicle in the third state is equal to the acceleration performance of the straddled electric vehicle in the fourth state. Accordingly, the rotation speed of the drive wheel can be appropriately controlled in either the third state or the fourth state.

In the straddled electric vehicle described above, it is preferable that:

when the electric motor rotates at the second rotation speed, a peripheral speed of the drive wheel be a second peripheral speed;
the second rotation speed be less than the first rotation speed; and
a difference between the second peripheral speed and the first speed be less than or equal to the threshold.

The second rotation speed is less than the first rotation speed. The difference between the second peripheral speed and the first speed is less than or equal to the threshold. Therefore, the difference between the second peripheral speed and the first speed is relatively small. Thus, in the third state, it is presumed that the drive wheel is properly in contact with the road surface. The third torque command value is equal to the fourth torque command value. As described above, regardless of whether the straddled electric vehicle is in the third state or the fourth state, the rotation speed of the electric motor is relatively likely to increase. Therefore, in the case where it is presumed that the drive wheel is properly in contact with the road surface, the rotation speed of the electric motor is relatively likely to increase even when the speed of the straddled electric vehicle is small. For example, in the case where it is presumed that the drive wheel is properly in contact with the road surface, it is easy to increase the speed of the straddled electric vehicle. Accordingly, in the case where it is presumed that the drive wheel is properly in contact with the road surface, it is easy to appropriately control the rotation speed of the drive wheel.

In the straddled electric vehicle described above, it is preferable that:
the information include first information and second information; the first information define a relationship among the operation amount of the accelerator, the rotation speed of the electric motor, and the torque command value; the second information define a relationship among the operation amount of the accelerator, the rotation speed of the electric motor, and the torque command value; when the speed of the straddled electric vehicle is in a first range, the controller select the torque command value using the first information to control the electric motor; and when the speed of the straddled electric vehicle is in a second range, the controller select the torque command value using the second information to control the electric motor.

Therefore, it is easy to reduce the size of the information. It is easy to reduce the capacity of the memory.

In the straddled electric vehicle described above, it is preferable that:

the controller control the torque of the electric motor to the first torque when the operation amount is a first operation amount, the rotation speed is the first rotation speed, and the speed is the first speed;
the controller control the torque of the electric motor to the second torque when the operation amount is the first operation amount, the rotation speed is the first rotation speed, and the speed is the second speed;
the first speed be less than the second speed; and
the first torque be less than the second torque.

When the operation amount is the first operation amount, the rotation speed is the first rotation speed, and the speed is the first speed, the electric motor outputs the first torque.

When the operation amount is the first operation amount, the rotation speed is the first rotation speed, and the speed is the second speed, the electric motor outputs the second torque.

Here, the first speed is less than the second speed. The first torque is less than the second torque. Therefore, when the operation amount is the first operation amount, the rotation speed is the first rotation speed, and the speed is the first speed, the rotation speed of the electric motor is relatively less likely to increase. Thus, when the operation amount is the first operation amount, the rotation speed is the first rotation speed, and the speed is the first speed, the rotation speed of the drive wheel does not become excessively high. Accordingly, when the operation amount is the first operation amount, the rotation speed is the first rotation speed, and the speed is the first speed, the rotation speed of the drive wheel can be appropriately controlled.

The second speed is larger than the first speed. The second torque is larger than the first torque. Therefore, when the operation amount is the first operation amount, the rotation speed is the first rotation speed, and the speed is the second speed, the rotation speed of the electric motor is relatively likely to increase. Thus, when the operation amount is the first operation amount, the rotation speed is the first rotation speed, and the speed is the second speed, the straddled electric vehicle smoothly accelerates. Accordingly, when the operation amount is the first operation amount, the rotation speed is the first rotation speed, and the speed is the second speed, the rotation speed of the drive wheel can be appropriately controlled.

In the straddled electric vehicle described above, it is preferable that:

a first reference value be less than the first rotation speed, and
when the operation amount is the first operation amount and the speed is the first speed, the torque of the electric motor decrease as the rotation speed increases in a range larger than the first reference value.

Therefore, when the operation amount is the first operation amount and the speed is the first speed, the torque of the electric motor gradually decreases as the rotation speed increases in the range larger than the first reference value. For example, in a case where the rotation speed is larger than the first reference value, the torque of the electric motor changes relatively slowly. Therefore, it is easy to maintain the comfort of the straddled electric vehicle. Accordingly, in the case where the rotation speed is larger than the first reference value, the rotation speed of the drive wheel can be appropriately controlled.

In the straddled electric vehicle described above, it is preferable that:

a second reference value be larger than the first reference value, and
when the operation amount is the first operation amount and the speed is the first speed, the torque of the electric motor decrease as the rotation speed increases in a range larger than the first reference value and less than or equal to the second reference value.

Therefore, when the operation amount is the first operation amount and the speed is the first speed, the torque of the electric motor gradually decreases as the rotation speed increases in the range larger than the first reference value and less than or equal to the second reference value. Thus, in the range where the rotation speed is larger than the first reference value and less than or equal to the second reference value, the torque of the electric motor changes relatively slowly. Therefore, it is easy to maintain the comfort of the straddled electric vehicle. Accordingly, in the range where the rotation speed is larger than the first reference value and less than or equal to the second reference value, the rotation speed of the drive wheel can be appropriately controlled.

According to the straddled electric vehicle of the present invention, it is easy to suitably control the rotation speed of the drive wheel.

Brief description of the drawings

For the purpose of illustrating the invention, there are shown in the drawings several forms which are presently preferred, it being understood, however, that the invention is not limited to the precise arrangement and instrumentalities shown.

Fig. 1 is a right side view of a straddled electric vehicle according to an embodiment.
Fig. 2 is a block diagram of the straddled electric vehicle.
Fig. 3 is a diagram indicating a configuration of information.
Fig. 4 is a diagram indicating a configuration of the information.
Fig. 5 is a diagram indicating a configuration of the information.
Fig. 6 is a diagram indicating a configuration of information according to a modified embodiment.
Fig. 7 is a diagram indicating a configuration of information according to the modified embodiment.

Embodiments of the invention

Hereinafter, a straddled electric vehicle according to the present invention will be described with reference to the drawings.

1. Schematic configuration of straddled electric vehicle 1

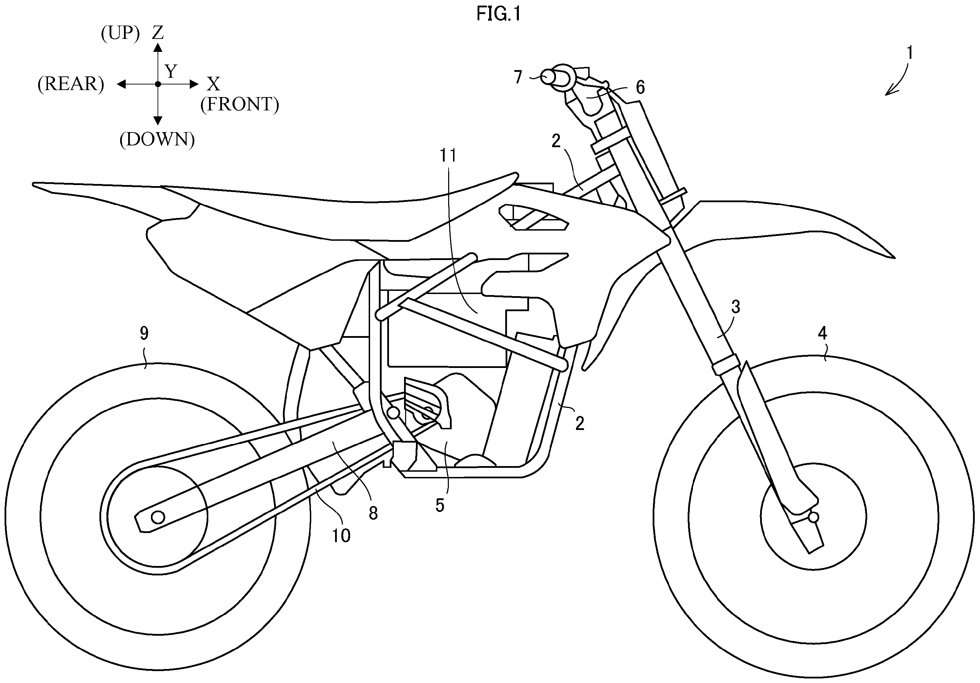

Fig. 1 is a right side view of a straddled electric vehicle 1 according to an embodiment. A schematic configuration of the straddled electric vehicle 1 will be described.

Fig. 1 illustrates a front-rear direction X, a width direction Y, and an up-down direction Z of the straddled electric vehicle 1. The front-rear direction X, the width direction Y, and the up-down direction Z are defined with reference to a driver (also referred to as a rider) riding on the straddled electric vehicle 1. The front-rear direction X, the width direction Y, and the up-down direction Z are orthogonal to each other. The front-rear direction X and the width direction Y are horizontal. The up-down direction Z is vertical.

"Frontward", "rearward", "upward", "downward", "rightward", and "leftward" mean "frontward", "rearward", "upward", "downward", "rightward", and "leftward", respectively, for a driver riding on the straddled electric vehicle 1. Unless otherwise specified in the present specification, "frontward" and "rearward" include not only a direction parallel to the front-rear direction X but also a direction close to the front-rear direction X. The direction close to the front-rear direction X is, for example, a direction in which an angle formed by the front-rear direction X is 45 degrees or less. Similarly, unless otherwise specified, "rightward" and "leftward" include not only a direction parallel to the width direction Y but also a direction close to the width direction Y. Unless otherwise specified, "upward" and "downward" include not only a direction parallel to the up-down direction Z but also a direction close to the up-down direction Z. In each drawing, FRONT, REAR, UP, DOWN, RIGHT, and LEFT are appropriately indicated as reference.

The straddled electric vehicle 1 is classified, for example, as an off-road vehicle. The off-road vehicle is suitable for traveling on an uneven ground, for example. The off-road vehicle includes, for example, a motocrosser and a dual purpose vehicle. The dual purpose vehicle is also referred to as a dual-sport motorcycle.

The straddled electric vehicle 1 includes a vehicle body frame 2.

The straddled electric vehicle 1 includes a front fork 3. The front fork 3 is supported by the vehicle body frame 2. The front fork 3 extends frontward and downward from the vehicle body frame 2.

The straddled electric vehicle 1 includes a front wheel 4. The front wheel 4 is supported by a lower portion of the front fork 3.

The straddled electric vehicle 1 includes an electric motor 5. The electric motor 5 propels the straddled electric vehicle 1. The electric motor 5 converts electric power into power for propulsion of the straddled electric vehicle 1. The electric motor 5 outputs power. The electric motor 5 is supported by the vehicle body frame 2.

The electric motor 5 is fixed to the vehicle body frame 2, for example. The electric motor 5 cannot swing with respect to the vehicle body frame 2, for example. The electric motor 5 is, for example, an AC motor.

The straddled electric vehicle 1 includes a handlebar 6. The handlebar 6 is supported by an upper portion of the front fork 3. An accelerator grip 7 is provided at a right end portion of the handlebar 6. The accelerator grip 7 is operated by a driver when an output of the electric motor 5 is adjusted. The accelerator grip 7 is also referred to as an "accelerator".

The accelerator grip 7 corresponds to an accelerator of the present invention.

The straddled electric vehicle 1 includes a swing arm 8. The swing arm 8 is supported by the vehicle body frame 2. The swing arm 8 is swingable with respect to the vehicle body frame 2. The swing arm 8 extends rearward from the vehicle body frame 2.

The straddled electric vehicle 1 includes a rear wheel 9. The rear wheel 9 is supported by a rear portion of the swing arm 8. The rear wheel 9 is driven by the rotation of the electric motor 5.

The rear wheel 9 corresponds to a drive wheel of the present invention.

The straddled electric vehicle 1 includes a transmission (not illustrated). The transmission is configured to change a speed change ratio between the electric motor 5 and the rear wheel 9. The transmission changes the rotation speed of the rear wheel 9 with respect to the rotation speed of the electric motor 5. Note that the straddled electric vehicle 1 may not include the transmission. In such a case, the speed change ratio between the electric motor 5 and the rear wheel 9 is constant. The ratio between the rotation speed of the electric motor 5 and the rotation speed of the rear wheel 9 is constant.

The straddled electric vehicle 1 includes a power transmission mechanism 10. The power transmission mechanism 10 transmits power from the electric motor 5 to the rear wheel 9. The power transmission mechanism 10 includes, for example, at least one of a chain, a belt, and a drive shaft.

The straddled electric vehicle 1 includes a battery 11. The battery 11 supplies power to the electric motor 5, for example. The battery 11 is supported by the vehicle body frame 2. The battery 11 is fixed to the vehicle body frame 2, for example. The battery 11 cannot swing with respect to the vehicle body frame 2, for example.

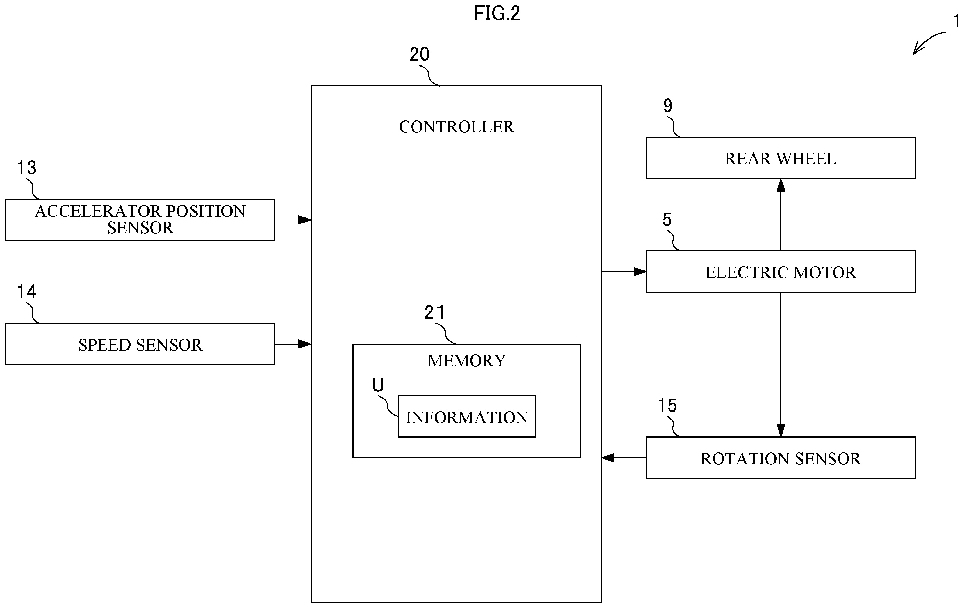

Fig. 2 is a block diagram of the straddled electric vehicle 1. The straddled electric vehicle 1 includes an accelerator position sensor 13. The accelerator position sensor 13 is directly or indirectly connected to the accelerator grip 7. The accelerator position sensor 13 detects an operation amount of the accelerator grip 7.

The straddled electric vehicle 1 includes a speed sensor 14. The speed sensor 14 is directly or indirectly connected to the front wheel 4 or the rear wheel 9. The speed sensor 14 detects the speed of the straddled electric vehicle 1, for example, by detecting the speed of the rotation of the front wheels 4 or the rear wheels 9. The speed sensor 14 detects the speed of the straddled electric vehicle 1.

The straddled electric vehicle 1 includes a rotation sensor 15. The rotation sensor 15 is directly or indirectly connected to the electric motor 5. The rotation sensor 15 detects the rotation speed of the electric motor 5.

The straddled electric vehicle 1 includes a controller 20.

The controller 20 is electrically connected to the accelerator position sensor 13. The controller 20 acquires the operation amount of the accelerator grip 7 detected by the accelerator position sensor 13.

The controller 20 is electrically connected to the speed sensor 14. The controller 20 acquires the speed of the straddled electric vehicle 1 detected by the speed sensor 14.

The controller 20 is electrically connected to the rotation sensor 15. The controller 20 acquires the rotation speed of the electric motor 5 detected by the rotation sensor 15.

The controller 20 is electrically connected to the electric motor 5. The controller 20 controls the output of the electric motor 5 based on the operation amount of the accelerator grip 7, the rotation speed of the electric motor 5, and the speed of the straddled electric vehicle 1. The controller 20 controls torque of the electric motor 5 based on the operation amount of the accelerator grip 7, the rotation speed of the electric motor 5, and the speed of the straddled electric vehicle 1.

The controller 20 includes a memory 21. The memory 21 stores information U. The controller 20 controls the electric motor 5 based on the information U.

2. Configuration of information U

A configuration of the information U will be described.

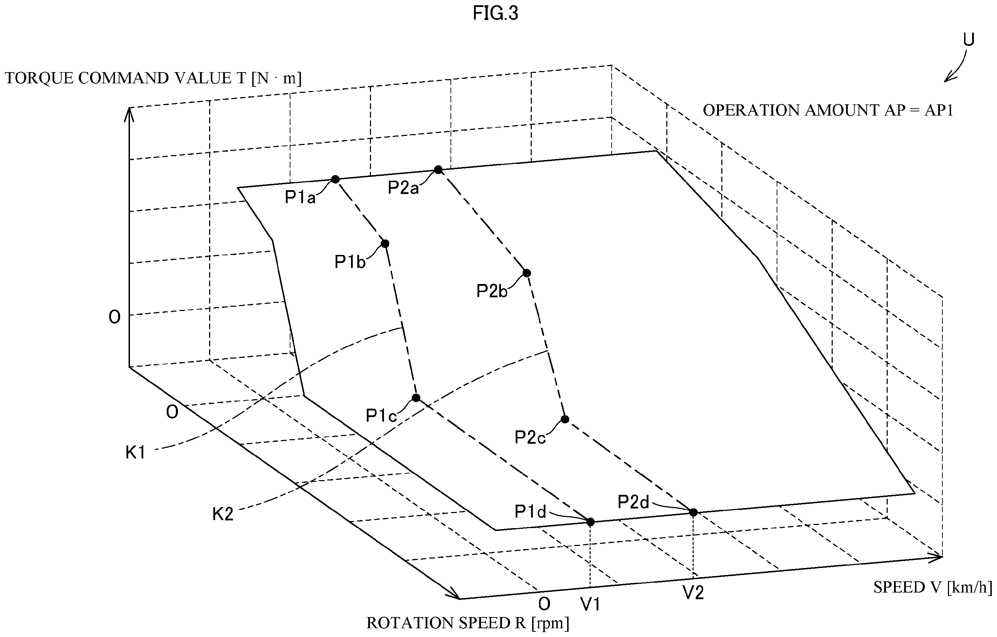

Fig. 3 is a diagram illustrating a configuration of the information U. The information U defines a relationship among an operation amount AP of the accelerator grip 7, a rotation speed R of the electric motor 5, a speed V of the straddled electric vehicle 1, and a torque command value T. The information U is indicated by, for example, three-dimensional coordinates. The information U includes a first axis, a second axis, and a third axis. The first axis indicates the rotation speed R of the electric motor 5. The unit of the rotation speed R is, for example, [rpm]. The second axis indicates the speed V of the straddled electric vehicle 1. The unit of the speed V is, for example, [km/h]. The third axis indicates the torque command value T. The unit of the torque command value T is, for example, [N·m]. For simplification of the drawing, Fig. 3 indicates the information U when the operation amount AP of the accelerator grip 7 is a first operation amount AP1.

The information U is, for example, a torque map. Note that the information U may be indicated by, for example, two-dimensional coordinates. The information U may be, for example, a table.

The torque command value T is a target value of the torque of the electric motor 5. The torque command value T is used by the controller 20 to control the electric motor 5. The torque of the electric motor 5 changes according to the torque command value T. When the torque command value T increases, the torque of the electric motor 5 increases. When the torque command value T decreases, the torque of the electric motor 5 decreases.

A curve K1 indicates a relationship between the rotation speed R and the torque command value T when the operation amount AP is the first operation amount AP1 and the speed V is a first speed V1. The curve K1 includes a point P1a, a point P1b, a point P1c, and a point P1d. The curve K1 connects the point P1a, the point P1b, the point P1c, and the point P1d.

A curve K2 indicates a relationship between the rotation speed R and the torque command value T when the operation amount AP is the first operation amount AP1 and the speed V is a second speed V2. The second speed V2 is larger than the first speed V1. The curve K2 includes a point P2a, a point P2b, a point P2c, and a point P2d. The curve K2 connects the point P2a, the point P2b, the point P2c, and the point P2d.

The torque command value T is dependent on the rotation speed R. The torque command value T changes according to the rotation speed R.

The torque command value T is dependent on the speed V. The torque command value T changes according to the speed V.

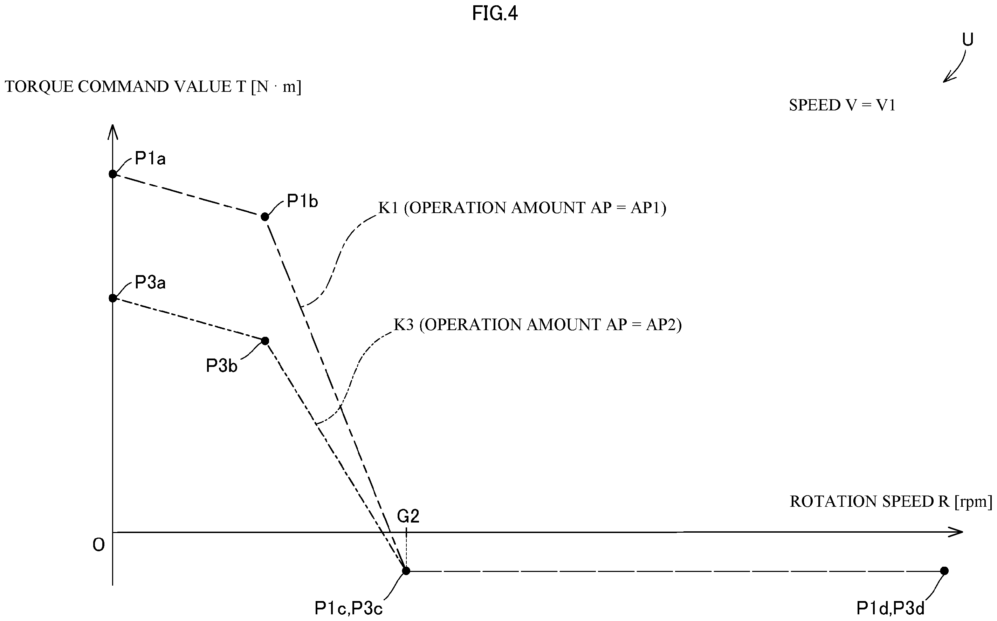

Fig. 4 is a diagram indicating a configuration of the information U. Fig. 4 indicates a part of the information U when the speed V is the first speed V1. The information U is represented by, for example, two-dimensional coordinates. The information U includes a first axis and a second axis. The first axis indicates the rotation speed R of the electric motor 5. The second axis indicates the torque command value T.

As described above, the curve K1 indicates the relationship between the rotation speed R and the torque command value T when the operation amount AP is the first operation amount AP1 and the speed V is the first speed V1. The curve K1 includes the point P1a, the point P1b, the point P1c, and the point P1d. The curve K1 connects the point P1a, the point P1b, the point P1c, and the point P1d.

A curve K3 indicates a relationship between the rotation speed R and the torque command value T when the operation amount AP is a second operation amount AP2 and the speed V is the first speed V1. The second operation amount AP2 is less than the first operation amount AP1. The curve K3 includes a point P3a, a point P3b, a point P3c, and a point P3d. The curve K3 connects the point P3a, the point P3b, the point P3c, and the point P3d.

The curve K1 and the curve K3 are different. The curve K1 and the curve K3 are different partially. For example, in a range where the rotation speed R is larger than or equal to 0 and less than a second reference value G2, the curve K1 and the curve K3 are different. For example, in a range where the rotation speed R is larger than or equal to the second reference value G2, the curve K1 and the curve K3 are the same. The second reference value G2 is the rotation speed R at the point P1c and is the rotation speed R at the point P3c.

The torque command value T is dependent on the operation amount AP. The torque command value T changes according to the operation amount AP. For example, the torque command value T when the operation amount AP is the first operation amount AP1, the speed V is the first speed V1, and the rotation speed R is a rotation speed RA is larger than the torque command value T when the operation amount AP is the second operation amount AP2, the speed V is the first speed V1, and the rotation speed R is the rotation speed RA. Note that the rotation speed RA is a value larger than or equal to 0 and less than the second reference value G2.

For example, the torque command value T when the operation amount AP is the first operation amount AP1, the speed V is the first speed V1, and the rotation speed R is the rotation speed RB is equal to the torque command value T when the operation amount AP is the second operation amount AP2, the speed V is the first speed V1, and the rotation speed R is a rotation speed RB. Note that the rotation speed RB is a value larger than or equal to the second reference value G2.

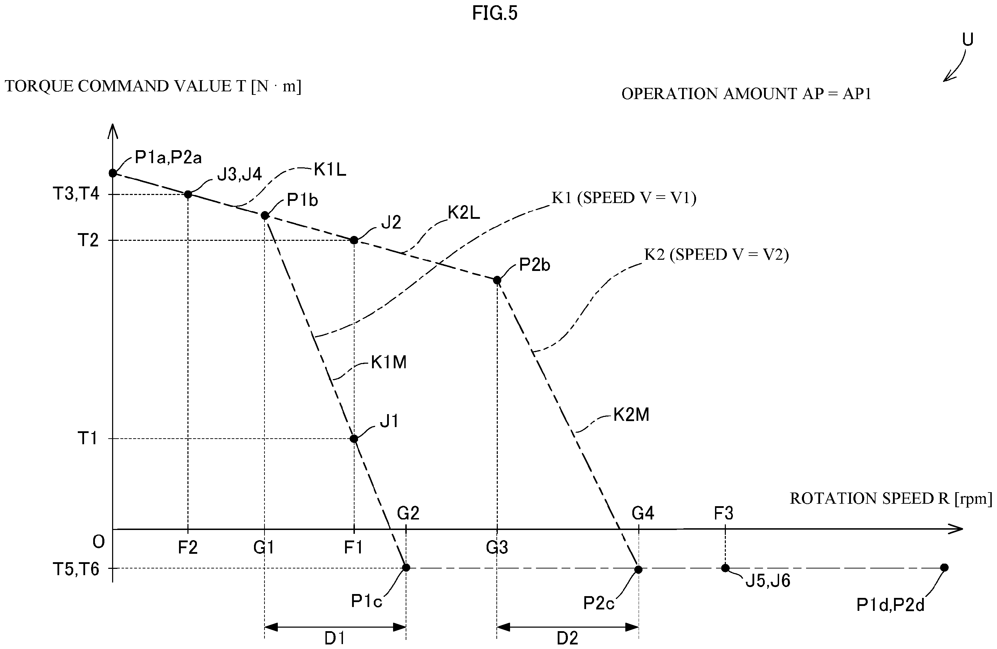

Fig. 5 is a diagram indicating a configuration of the information U. Fig. 5 indicates a part of the information U when the operation amount AP is the first operation amount AP1. As described above, the curve K1 indicates the relationship between the rotation speed R and the torque command value T when the operation amount AP is the first operation amount AP1 and the speed V is the first speed V1. The curve K1 is dependent on the rotation speed R. The torque command value T of the curve K1 changes according to the rotation speed R. As described above, the curve K2 indicates the relationship between the rotation speed R and the torque command value T when the operation amount AP is the first operation amount AP1 and the speed V is the second speed V2. The curve K2 is dependent on the rotation speed R. The torque command value T of the curve K2 changes according to the rotation speed R.

The curve K1 will be described. In a range where the rotation speed R is larger than or equal to 0 and less than or equal to the first reference value G1, the torque command value T of the curve K1 decreases as the rotation speed R increases. When the operation amount AP is the first operation amount AP1 and the speed V is the first speed V1, the torque command value T decreases as the rotation speed R increases in the range larger than or equal to 0 and less than or equal to the first reference value G1. Note that, in the range where the rotation speed R is larger than or equal to 0 and less than or equal to the first reference value G1, the torque command value T of the curve K1 may not decrease as the rotation speed R increases. For example, in the range where the rotation speed R is larger than or equal to 0 and less than or equal to the first reference value G1, the torque command value T of the curve K1 may be constant.

Therefore, when the operation amount AP is the first operation amount AP1 and the speed V is the first speed V1, the torque of the electric motor 5 decreases as the rotation speed R increases in the range larger than or equal to 0 and less than or equal to the first reference value G1. The first reference value G1 is the rotation speed R at the point P1b.

In a range where the rotation speed R is larger than the first reference value G1, the torque command value T of the curve K1 decreases as the rotation speed R increases. When the operation amount AP is the first operation amount AP1 and the speed V is the first speed V1, the torque command value T decreases as the rotation speed R increases in the range larger than the first reference value G1.

Therefore, when the operation amount AP is the first operation amount AP1 and the speed V is the first speed V1, the torque of the electric motor 5 decreases as the rotation speed R increases in the range larger than the first reference value G1.

In a range where the rotation speed R is larger than the first reference value G1 and less than or equal to the second reference value G2, the torque command value T of the curve K1 decreases as the rotation speed R increases. The second reference value G2 is larger than the first reference value G1. When the operation amount AP is the first operation amount AP1 and the speed V is the first speed V1, the torque command value T decreases as the rotation speed R increases in the range larger than the first reference value G1 and less than or equal to the second reference value G2.

Therefore, when the operation amount AP is the first operation amount AP1 and the speed V is the first speed V1, the torque of the electric motor 5 decreases as the rotation speed R increases in the range larger than the first reference value G1 and less than or equal to the second reference value G2.

The curve K1 includes a section K1L and a section K1M. The section K1L is a portion of the curve K1 between the point P1a and the point P1b. The section K1L is a portion of the curve K1 in the range where the rotation speed R is larger than or equal to 0 and less than or equal to the first reference value G1. The section K1M is a portion of the curve K1 between the point P1b and the point P1c. The section K1M is a portion of the curve K1 in the range where the rotation speed R is larger than or equal to the first reference value G1 and less than or equal to the second reference value G2.

An inclination of the section K1M is larger than an inclination of the section K1L.

A difference between the second reference value G2 and the first reference value G1 is defined as a difference D1. The difference D1 is, for example, 100 rpm or more. The rotation speed R at the point P1b is different from the rotation speed R at the point P1c. Therefore, the section K1M is inclined.

In the range where the rotation speed R is larger than or equal to the second reference value G2, the torque command value T of the curve K1 is the minimum value. When the operation amount AP is the first operation amount AP1, the speed V is the first speed V1, and the rotation speed R is larger than or equal to the second reference value G2, the torque command value T is the minimum value.

In the range where the rotation speed R is larger than or equal to the second reference value G2, the torque command value T of the curve K1 is less than zero. When the operation amount AP is the first operation amount AP1, the speed V is the first speed V1, and the rotation speed R is larger than or equal to the second reference value G2, the torque command value T is less than zero.

In the range where the rotation speed R is larger than or equal to the second reference value G2, the torque command value T of the curve K1 is constant.

The curve K2 will be described. In a range where the rotation speed R is larger than or equal to 0 and less than or equal to a third reference value G3, the torque command value T of the curve K2 decreases as the rotation speed R increases. When the operation amount AP is the first operation amount AP1 and the speed V is the second speed V2, the torque command value T decreases as the rotation speed R increases in the range larger than or equal to 0 and less than or equal to the third reference value G3. In the range where the rotation speed R is larger than or equal to 0 and less than or equal to the third reference value G3, the torque command value T of the curve K2 may not decrease as the rotation speed R increases. For example, in the range where the rotation speed R is larger than or equal to 0 and less than or equal to the third reference value G3, the torque command value T of the curve K2 may be constant.

Therefore, when the operation amount AP is the first operation amount AP1 and the speed V is the second speed V2, the torque of the electric motor 5 decreases as the rotation speed R increases in the range larger than or equal to 0 and less than or equal to the third reference value G3. The third reference value G3 is the rotation speed R at the point P2b.

In a range where the rotation speed R is larger than the third reference value G3 and less than or equal to a fourth reference value G4, the torque command value T of the curve K2 decreases as the rotation speed R increases. The fourth reference value G4 is larger than the third reference value G3. When the operation amount AP is the first operation amount AP1 and the speed V is the second speed V2, the torque command value T decreases as the rotation speed R increases in the range larger than the third reference value G3 and less than or equal to a fourth reference value G4.

Therefore, when the operation amount AP is the first operation amount AP1 and the speed V is the second speed V2, the torque of the electric motor 5 decreases as the rotation speed R increases in the range larger than the third reference value G3 and less than or equal to a fourth reference value G4. The fourth reference value G4 is the rotation speed R at the point P2c.

The curve K2 includes a section K2L and a section K2M. The section K2L is a portion of the curve K2 between the point P2a and the point P2b. The section K2L is a portion of the curve K2 in the range where the rotation speed R is larger than or equal to 0 and less than or equal to the third reference value G3. The section K2M is a portion of the curve K2 between the point P2b and the point P2c. The section K2M is a portion of the curve K2 in the range where the rotation speed R is larger than or equal to the third reference value G3 and less than or equal to the fourth reference value G4.

An inclination of the section K2M is larger than an inclination of the section K2L.

A difference between the fourth reference value G4 and the third reference value G3 is defined as a difference D2. The difference D2 is, for example, 100 rpm or more. The rotation speed R at the point P2b is different from the rotation speed R at the point P2c. Therefore, the section K2M is inclined.

In a range where the rotation speed R is larger than or equal to the fourth reference value G4, the torque command value T of the curve K2 is the minimum value. When the operation amount AP is the first operation amount AP1, the speed V is the second speed V2, and the rotation speed R is larger than or equal to the fourth reference value G4, the torque command value T is the minimum value.

In the range where the rotation speed R is larger than or equal to the fourth reference value G4, the torque command value T of the curve K2 is less than zero. When the operation amount AP is the first operation amount AP1, the speed V is the second speed V2, and the rotation speed R is larger than or equal to the fourth reference value G4, the torque command value T is less than zero.

In the range where the rotation speed R is larger than or equal to the fourth reference value G4, the torque command value T of the curve K2 is constant.

The curve K1 and the curve K2 are compared. The curve K1 and the curve K2 are different. The curve K1 and the curve K2 are different partially.

In the range where the rotation speed R is larger than or equal to 0 and less than or equal to the first reference value G1, the curve K1 and the curve K2 are the same. When comparison is made at the same rotation speed R in the range where the rotation speed R is larger than or equal to 0 and less than or equal to the first reference value G1, the torque command value T of the curve K1 is equal to the torque command value T of the curve K2. For example, in the information U, the torque command value T when the operation amount AP is the first operation amount AP1, the rotation speed R is a second rotation speed F2, and the speed V is the first speed V1 is set to a third torque command value T3. In the information U, the torque command value T when the operation amount AP is the first operation amount AP1, the rotation speed R is the second rotation speed F2, and the speed V is the second speed V2 is set to a fourth torque command value T4. The first speed V1 is less than the second speed V2. The third torque command value T3 is equal to the fourth torque command value T4. Here, the second rotation speed F2 is a value larger than or equal to 0 and less than or equal to the first reference value G1.

For convenience, a state in which the operation amount AP is the first operation amount AP1, the rotation speed R is the second rotation speed F2, and the speed V is the first speed V1 is referred to as a "third state J3". A state in which the operation amount AP is the first operation amount AP1, the rotation speed R is the second rotation speed F2, and the speed V is the second speed V2 is referred to as a "fourth state J4". The third torque command value T3 is the torque command value T in the third state J3. The fourth torque command value T4 is the torque command value T in the fourth state J4.

In a range where the rotation speed R is larger than the first reference value G1 and less than the fourth reference value G4, the curve K1 and the curve K2 are different. When comparison is made at the same rotation speed R in the range where the rotation speed R is larger than the first reference value G1 and less than the fourth reference value G4, the torque command value T of the curve K1 is less than the torque command value T of the curve K2. For example, in the information U, the torque command value T when the operation amount AP is the first operation amount AP1, the rotation speed R is a first rotation speed F1, and the speed V is the first speed V1 is set to a first torque command value T1. In the information U, the torque command value T when the operation amount AP is the first operation amount AP1, the rotation speed R is the first rotation speed F1, and the speed V is the second speed V2 is set to a second torque command value T2. The first torque command value T1 is less than the second torque command value T2. Here, the first rotation speed F1 is a value larger than the first reference value G1 and less than the fourth reference value G4. The first reference value G1 is less than the first rotation speed F1. The second rotation speed F2 is less than the first rotation speed F1.

Therefore, when the operation amount AP is the first operation amount AP1, the rotation speed R is the first rotation speed F1, and the speed V is the first speed V1, the controller 20 controls the torque of the electric motor 5 to first torque. When the operation amount AP is the first operation amount AP1, the rotation speed R is the first rotation speed F1, and the speed V is the second speed V2, the controller 20 controls the torque of the electric motor 5 to second torque. The first torque is less than the second torque.

For convenience, a state in which the operation amount AP is the first operation amount AP1, the rotation speed R is the first rotation speed F1, and the speed V is the first speed V1 is referred to as a "first state J1". A state in which the operation amount AP is the first operation amount AP1, the rotation speed R is the first rotation speed F1, and the speed V is the second speed V2 is referred to as a "second state J2". The first torque command value T1 is the torque command value T in the first state J1. The second torque command value T2 is the torque command value T in the second state J2.

In the range where the rotation speed R is larger than or equal to the fourth reference value G4, the curve K1 and the curve K2 are the same. When comparison is made at the same rotation speed R in the range where the rotation speed R is larger than or equal to the fourth reference value G4, the torque command value T of the curve K1 is equal to the torque command value T of the curve K2. For example, in the information U, the torque command value T when the operation amount AP is the first operation amount AP1, the rotation speed R is a third rotation speed F3, and the speed V is the first speed V1 is set to a fifth torque command value T5. In the information U, the torque command value T when the operation amount AP is the first operation amount AP1, the rotation speed R is the third rotation speed F3, and the speed V is the second speed V2 is set to a sixth torque command value T6. The fifth torque command value T5 is equal to the sixth torque command value T6. Here, the third rotation speed F3 is a value larger than or equal to the fourth reference value G4.

For convenience, a state in which the operation amount AP is the first operation amount AP1, the rotation speed R is the third rotation speed F3, and the speed V is the first speed V1 is referred to as a "fifth state J5". A state in which the operation amount AP is the first operation amount AP1, the rotation speed R is the third rotation speed F3, and the speed V is the second speed V2 is referred to as a "sixth state J6". The fifth torque command value T5 is the torque command value T in the fifth state J5. The sixth torque command value T6 is the torque command value T in the sixth state J6.

3. Limitation of torque command value T

The limitation of the torque command value T will be described. A range in which the torque command value T is not limited in the curve K1 will be described. As described above, when the comparison is made at the same rotation speed R in the range where the rotation speed R is larger than or equal to 0 and less than or equal to the first reference value G1, the torque command value T of the curve K1 is equal to the torque command value T of the curve K2. Therefore, the torque command value T is not limited when the operation amount AP is the first operation amount AP1, the speed V is the first speed V1, and the rotation speed R is in the range of larger than or equal to 0 and less than or equal to the first reference value G1.

Thus, when the operation amount AP is the first operation amount AP1, the speed V is the first speed V1, and the rotation speed R is in the range of larger than or equal to 0 and less than or equal to the first reference value G1, the torque of the electric motor 5 is not limited.

Therefore, when the operation amount AP is the first operation amount AP1, the speed V is the first speed V1, and the rotation speed R is in the range of larger than or equal to 0 and less than or equal to the first reference value G1, the rotation speed R of the electric motor 5 is relatively likely to increase. Accordingly, when the operation amount AP is the first operation amount AP1, the speed V is the first speed V1, and the rotation speed R is in the range of larger than or equal to 0 and less than or equal to the first reference value G1, the straddled electric vehicle 1 smoothly accelerates.

A range in which the torque command value T is limited in the curve K1 will be described. As described above, when the comparison is made at the same rotation speed R in the range where the rotation speed R is larger than the first reference value G1 and less than the fourth reference value G4, the torque command value T of the curve K1 is less than the torque command value T of the curve K2. As described above, in the range where the rotation speed R is larger than or equal to the second reference value G2, the torque command value T of the curve K1 is the minimum value. Therefore, when the operation amount AP is the first operation amount AP1, the speed V is the first speed V1, and the rotation speed R is in the range larger than the first reference value G1, the torque command value T is limited.

Thus, when the operation amount AP is the first operation amount AP1, the speed V is the first speed V1, and the rotation speed R is in the range larger than the first reference value G1, the torque of the electric motor 5 is limited.

Therefore, when the operation amount AP is the first operation amount AP1, the speed V is the first speed V1, and the rotation speed R is in the range larger than the first reference value G1, the rotation speed R of the electric motor 5 is relatively less likely to increase. Accordingly, when the operation amount AP is the first operation amount AP1, the speed V is the first speed V1, and the rotation speed R is in the range larger than the first reference value G1, the rotation speed of the rear wheel 9 does not become excessively high.

In the curve K1, the first reference value G1 corresponds to a lower limit value of the range of the rotation speed R in which the torque command value T is limited. The first reference value G1 corresponds to the lower limit value of the range of the rotation speed R in which the torque command value T is limited when the operation amount AP is the first operation amount AP1 and the speed V is the first speed V1.

In the curve K1, the second reference value G2 corresponds to a lower limit value of the range of the rotation speed R in which the torque command value T is the minimum value. The second reference value G2 corresponds to the lower limit value of the range of the rotation speed R in which the torque command value T is the minimum value when the operation amount AP is the first operation amount AP1 and the speed V is the first speed V1.

A range in which the torque command value T is not limited in the curve K2 will be described. The torque command value T is not limited when the operation amount AP is the first operation amount AP1, the speed V is the second speed V2, and the rotation speed R is in the range of larger than or equal to 0 and less than or equal to the third reference value G3.

Therefore, when the operation amount AP is the first operation amount AP1, the speed V is the second speed V2, and the rotation speed R is in the range of larger than or equal to 0 and less than or equal to the third reference value G3, the torque of the electric motor 5 is not limited.

Thus, when the operation amount AP is the first operation amount AP1, the speed V is the second speed V2, and the rotation speed R is in the range of larger than or equal to 0 and less than or equal to the third reference value G3, the rotation speed R of the electric motor 5 is relatively likely to increase. Accordingly, when the operation amount AP is the first operation amount AP1, the speed V is the second speed V2, and the rotation speed R is in the range of larger than or equal to 0 and less than or equal to the third reference value G3, the straddled electric vehicle 1 smoothly accelerates.

A range in which the torque command value T is limited in the curve K2 will be described. The torque command value T is limited when the operation amount AP is the first operation amount AP1, the speed V is the second speed V2, and the rotation speed R is in the range larger than the third reference value G3. In the range where the rotation speed R is larger than or equal to the fourth reference value G4, the torque command value T of the curve K2 is the minimum value.

Therefore, when the operation amount AP is the first operation amount AP1, the speed V is the second speed V2, and the rotation speed R is in the range larger than the third reference value G3, the torque of the electric motor 5 is limited.

Thus, when the operation amount AP is the first operation amount AP1, the speed V is the second speed V2, and the rotation speed R is in the range larger than the third reference value G3, the rotation speed R of the electric motor 5 is relatively less likely to increase. Accordingly, when the operation amount AP is the first operation amount AP1, the speed V is the second speed V2, and the rotation speed R is in the range larger than the third reference value G3, the rotation speed of the rear wheel 9 does not become excessively high.

In the curve K2, the third reference value G3 corresponds to a lower limit value of the range of the rotation speed R in which the torque command value T is limited. The third reference value G3 corresponds to the lower limit value of the range of the rotation speed R in which the torque command value T is limited when the operation amount AP is the first operation amount AP1 and the speed V is the second speed V2.

In the curve K2, the fourth reference value G4 corresponds to a lower limit value of the range of the rotation speed R in which the torque command value T is the minimum value. The fourth reference value G4 corresponds to the lower limit value of the range of the rotation speed R in which the torque command value T is the minimum value when the operation amount AP is the first operation amount AP1 and the speed V is the second speed V2.

When the operation amount AP is the same, the lower limit value of the range of the rotation speed R in which the torque command value T is limited increases as the speed V increases. For example, when the speed V increases from the first speed V1 to the second speed V2, the lower limit value of the range of the rotation speed R in which the torque command value T is limited increases from the first reference value G1 to the third reference value G3.

When the operation amount AP is the same, the lower limit value of the range of the rotation speed R in which the torque command value T is the minimum value increases as the speed V increases. For example, when the speed V increases from the first speed V1 to the second speed V2, the lower limit value of the range of the rotation speed R in which the torque command value T is the minimum value increases from the second reference value G2 to the fourth reference value G4.

For example, when the speed V increases from the first speed V1 to the second speed V2, the range of the first reference value G1 to the second reference value G2 in the curve K1 shifts to the range of the third reference value G3 to the fourth reference value G4 in the curve K2.

For example, when the speed V increases from the first speed V1 to the second speed V2, the section K1M shifts to the section K2M.

It is preferable that the torque command value T be not limited when the rear wheel 9 is properly in contact with the road surface. It is preferable that the torque command value T be not limited when the rear wheel 9 is not spinning with respect to the road surface.

It is preferable that the torque command value T be limited when the rear wheel 9 is not properly in contact with the road surface. It is preferable that the torque command value T be limited when the rear wheel 9 is spinning with respect to the road surface.

It is easy to presume whether the rear wheel 9 is properly in contact with the road surface based on the rotation speed R and the speed V. It is easy to presume whether the rear wheel 9 is spinning with respect to the road surface based on the rotation speed R and the speed V.

For example, when the electric motor 5 rotates, the rear wheel 9 rotates. Specifically, when the electric motor 5 rotates at the rotation speed R, the rear wheel 9 has a peripheral speed S. The unit of the peripheral speed S is the same as the speed V. The unit of the peripheral speed S is, for example, [km/h]. The relationship between the peripheral speed S and the rotation speed R is expressed by, for example, the following formula.

$$S = 2\pi r \cdot k \cdot R \cdot 60/1000$$

Here, r is the radius of the rear wheel 9, and k is a ratio of the rotation speed R to the rotation speed of the rear wheel 9.

When a difference between the peripheral speed S and the speed V is larger than a threshold M, it is presumed that the rear wheel 9 is not properly in contact with the road surface. When the difference between the peripheral speed S and the speed V is larger than the threshold M, it is presumed that the rear wheel 9 is spinning with respect to the road surface.

When the difference between the peripheral speed S and the speed V is less than or equal to the threshold M, it is presumed that the rear wheel 9 is properly in contact with the road surface. When the difference between the peripheral speed S and the speed V is less than or equal to the threshold M, it is presumed that the rear wheel 9 is not spinning with respect to the road surface.

The threshold M is a threshold for slip determination. The threshold M may be, for example, a constant or a variable. When the threshold M is a constant, the threshold M is, for example, 10 [km/h]. When the threshold M is a variable, the threshold M is, for example, the first speed V1 × 10 [%].

In the curve K1, it is preferable that the first reference value G1 be set to the following value, for example. The peripheral speed S when the rotation speed R is the first reference value G1 is defined as a first reference peripheral speed SG1. The first reference value G1 is the rotation speed R at which the first reference peripheral speed SG1 is generated. Therefore, when the rotation speed R is less than or equal to the first reference value G1, the peripheral speed S is less than or equal to the first reference peripheral speed SG1. When the rotation speed R is larger than the first reference value G1, the peripheral speed S is larger than the first reference peripheral speed SG1.

It is preferable that the first reference value G1 be set such that the first reference peripheral speed SG1 becomes equal to the sum of the first speed V1 and the threshold M. In other words, it is preferable that the first reference value G1 be set such that the difference between the first reference peripheral speed SG1 and the first speed V1 becomes equal to the threshold M.

In a case where the first reference value G1 is set such that the difference between the first reference peripheral speed SG1 and the first speed V1 becomes equal to the threshold M, when the rotation speed R is less than or equal to the first reference value G1, the difference between the peripheral speed S and the first speed V1 is less than or equal to the threshold M. Therefore, when the speed V is the first speed V1 and the rotation speed R is less than or equal to the first reference value G1, it is presumed that the rear wheel 9 is properly in contact with the road surface. When the speed V is the first speed V1 and the rotation speed R is less than or equal to the first reference value G1, it is presumed that the rear wheel 9 is not spinning with respect to the road surface.

The second rotation speed F2 is less than the first rotation speed F1. The peripheral speed S of the rear wheel 9 when the electric motor 5 rotates at the second rotation speed F2 is defined as a second peripheral speed S2. The second rotation speed F2 is less than or equal to the first reference value G1. Thus, a difference between the second peripheral speed S2 and the first speed V1 is less than or equal to the threshold M. Therefore, when the speed V is the first speed V1 and the rotation speed R is the second rotation speed F2, it is presumed that the rear wheel 9 is appropriately in contact with the road surface. When the speed V is the first speed V1 and the rotation speed R is the second rotation speed F2, it is presumed that the rear wheel 9 is not spinning with respect to the road surface.

In a case where the first reference value G1 is set such that the difference between the first reference peripheral speed SG1 and the first speed V1 becomes equal to the threshold M, when the rotation speed R is larger than the first reference value G1, the difference between the peripheral speed S and the first speed V1 is larger than the threshold M. Therefore, when the speed V is the first speed V1 and the rotation speed R is larger than the first reference value G1, it is presumed that the rear wheel 9 is not properly in contact with the road surface. When the speed V is the first speed V1 and the rotation speed R is larger than the first reference value G1, it is presumed that the rear wheel 9 is spinning with respect to the road surface.

The peripheral speed S of the rear wheel 9 when the electric motor 5 rotates at the first rotation speed F1 is defined as a first peripheral speed S1. The first peripheral speed S1 is larger than the first speed V1. The first rotation speed F1 is larger than the first reference value G1. Thus, a difference between the first peripheral speed S1 and the first speed V1 is larger than the threshold M. Therefore, when the speed V is the first speed V1 and the rotation speed R is the first rotation speed F1, it is presumed that the rear wheel 9 is not properly in contact with the road surface. When the speed V is the first speed V1 and the rotation speed R is the first rotation speed F1, it is presumed that the rear wheel 9 is spinning with respect to the road surface.

In the curve K2, it is preferable that the third reference value G3 be set to the following value, for example. The peripheral speed S when the rotation speed R is the third reference value G3 is defined as a third reference peripheral speed SG3. The third reference value G3 is the rotation speed R at which the third reference peripheral speed SG3 is generated. Therefore, when the rotation speed R is less than or equal to the third reference value G3, the peripheral speed S is less than or equal to the third reference peripheral speed SG3. When the rotation speed R is larger than the third reference value G3, the peripheral speed S is larger than the third reference peripheral speed SG3.

It is preferable that the third reference value G3 be set such that the third reference peripheral speed SG3 becomes equal to the sum of the second speed V2 and the threshold M. In other words, it is preferable that the third reference value G3 be set such that the difference between the third reference peripheral speed SG3 and the second speed V2 becomes equal to the threshold M.

In a case where the third reference value G3 is set such that the difference between the third reference peripheral speed SG3 and the second speed V2 becomes equal to the threshold M, when the rotation speed R is less than or equal to the third reference value G3, the difference between the peripheral speed S and the second speed V2 is less than or equal to the threshold M. Therefore, when the speed V is the second speed V2 and the rotation speed R is less than or equal to the third reference value G3, it is presumed that the rear wheel 9 is properly in contact with the road surface. When the speed V is the second speed V2 and the rotation speed R is less than or equal to the third reference value G3, it is presumed that the rear wheel 9 is not spinning with respect to the road surface.

The first rotation speed F1 is less than or equal to the third reference value G3. Thus, a difference between the first peripheral speed S1 and the second speed V2 is less than or equal to the threshold M. Therefore, when the speed V is the second speed V2 and the rotation speed R is the first rotation speed F1, it is presumed that the rear wheel 9 is properly in contact with the road surface. When the speed V is the second speed V2 and the rotation speed R is the first rotation speed F1, it is presumed that the rear wheel 9 is not spinning with respect to the road surface.

In a case where the third reference value G3 is set such that the difference between the third reference peripheral speed SG3 and the second speed V2 becomes equal to the threshold M, when the rotation speed R is larger than the third reference value G3, the difference between the peripheral speed S and the second speed V2 is larger than the threshold M. Therefore, when the speed V is the second speed V2 and the rotation speed R is larger than the third reference value G3, it is presumed that the rear wheel 9 is not properly in contact with the road surface. When the speed V is the second speed V2 and the rotation speed R is larger than the third reference value G3, it is presumed that the rear wheel 9 is spinning with respect to the road surface.

4. Effects of embodiment

The straddled electric vehicle 1 includes the electric motor 5 and the rear wheel 9. The rear wheel 9 is driven by the rotation of the electric motor 5. Furthermore, the straddled electric vehicle 1 includes the accelerator position sensor 13, the rotation sensor 15, the speed sensor 14, and the controller 20. The accelerator position sensor 13 detects the operation amount AP of the accelerator grip 7. The rotation sensor 15 detects the rotation speed R of the electric motor 5. The speed sensor 14 detects the speed V of the straddled electric vehicle 1. The controller 20 controls the torque of the electric motor 5 based on the operation amount AP of the accelerator grip 7, the rotation speed R of the electric motor 5, and the speed V of the straddled electric vehicle 1. Therefore, it is easy to suitably control the rotation speed R of the rear wheel 9. For example, the increase amount of the rotation speed of the rear wheel 9 when the rear wheel 9 floats from the road surface can be reduced. Even when the rear wheel 9 spins, for example, the rotation speed of the rear wheel 9 does not become excessively high. For example, the rotation speed of the rear wheel 9 at the time of spinning does not rapidly increase.

The controller 20 includes the memory 21. The memory 21 stores the information U. The information U defines the relationship among the operation amount AP of the accelerator grip 7, the rotation speed R of the electric motor 5, the speed V of the straddled electric vehicle 1, and the torque command value T. Therefore, it is easy for the controller 20 to acquire the torque command value T. The controller 20 controls the electric motor 5 with the torque command value T. For example, the controller 20 controls the torque of the electric motor 5 so as to be equal to the torque command value T. Therefore, it is easy for the controller 20 to control the torque of the electric motor 5 based on the operation amount AP of the accelerator grip 7, the rotation speed R of the electric motor 5, and the speed V of the straddled electric vehicle 1.

In the information U, the torque command value T when the operation amount AP is the first operation amount AP1, the rotation speed R is the first rotation speed F1, and the speed V is the first speed V1 is set to the first torque command value T1. In the information U, the torque command value T when the operation amount AP is the first operation amount AP1, the rotation speed R is the first rotation speed F1, and the speed V is the second speed V2 is set to the second torque command value T2. The first speed V1 is less than the second speed V2. The first torque command value T1 is less than the second torque command value T2. In the first state J1 described above, the controller 20 controls the electric motor 5 with the first torque command value T1. When the controller 20 controls the electric motor 5 with the first torque command value T1, the electric motor 5 outputs the first torque. In the second state J2 described above, the controller 20 controls the electric motor 5 with the second torque command value T2. When the controller 20 controls the electric motor 5 with the second torque command value T2, the electric motor 5 outputs the second torque. Here, the first speed V1 is less than the second speed V2. The first torque command value T1 is less than the second torque command value T2. As the torque command value T decreases, the torque output from the electric motor 5 decreases. Therefore, the first torque is less than the second torque. Thus, in the first state J1, the rotation speed R of the electric motor 5 is relatively less likely to increase. Therefore, the rotation speed of the rear wheel 9 does not become excessively high. Accordingly, in the first state J1, the rotation speed of the rear wheel 9 can be appropriately controlled. The second speed V2 is larger than the first speed V1. The second torque command value T2 is larger than the first torque command value T1. As the torque command value T increases, the torque output from the electric motor 5 increases. Therefore, the second torque is larger than the first torque. Thus, in the second state J2, the rotation speed R of the electric motor 5 is relatively likely to increase. Therefore, in the second state J2, the straddled electric vehicle 1 smoothly accelerates. Accordingly, the rotation speed of the rear wheel 9 can be appropriately controlled even in the second state J2.

When the electric motor 5 rotates at the first rotation speed F1, the peripheral speed S of the rear wheel 9 is the first peripheral speed S1. The first peripheral speed S1 is larger than the first speed V1. The difference between the first peripheral speed S1 and the first speed V1 is larger than the threshold M. Therefore, the difference between the first peripheral speed S1 and the first speed V1 is relatively large. Thus, in the first state J1, it is presumed that the rear wheel 9 is spinning. As described above, in the first state J1, the rotation speed R of the electric motor 5 is relatively less likely to increase. Therefore, in a case where it is presumed that the rear wheel 9 is spinning, the rotation speed of the rear wheel 9 does not become excessively high. Accordingly, in the case where it is presumed that the rear wheel 9 is spinning, the rotation speed of the rear wheel 9 can be appropriately controlled.

The difference between the first peripheral speed S1 and the second speed V2 is less than or equal to the threshold M. Therefore, the difference between the first peripheral speed S1 and the second speed V2 is relatively small. Thus, in the second state J2, it is presumed that the rear wheel 9 is properly in contact with the road surface. As described above, in the second state J2, the rotation speed R of the electric motor 5 is relatively likely to increase. Therefore, in a case where it is presumed that the rear wheel 9 is properly in contact with the road surface, the straddled electric vehicle 1 smoothly accelerates. Accordingly, in the case where it is presumed that the rear wheel 9 is properly in contact with the road surface, the rotation speed of the rear wheel 9 can be appropriately controlled.

The first reference value G1 is less than the first rotation speed F1. When the operation amount AP is the first operation amount AP1 and the speed V is the first speed V1, the torque command value T decreases as the rotation speed R increases in the range larger than the first reference value G1. Therefore, when the operation amount AP is the first operation amount AP1 and the speed V is the first speed V1, the torque of the electric motor 5 gradually decreases as the rotation speed R increases in the range larger than the first reference value G1. For example, in a case where the rotation speed R is larger than the first reference value G1, the torque of the electric motor 5 changes relatively slowly. Therefore, it is easy to maintain the comfort of the straddled electric vehicle 1. Accordingly, in the case where the rotation speed R is larger than the first reference value G1, the rotation speed of the rear wheel 9 can be appropriately controlled.

The second reference value G2 is larger than the first reference value G1. When the operation amount AP is the first operation amount AP1 and the speed V is the first speed V1, the torque command value T decreases as the rotation speed R increases in the range larger than the first reference value G1 and less than or equal to the second reference value G2. Therefore, when the operation amount AP is the first operation amount AP1 and the speed V is the first speed V1, the torque of the electric motor 5 gradually decreases as the rotation speed R increases in the range larger than the first reference value G1 and less than or equal to the second reference value G2. Thus, the torque of the electric motor 5 changes relatively slowly. Therefore, it is easy to maintain the comfort of the straddled electric vehicle 1. Accordingly, in the range where the rotation speed R is larger than the first reference value G1 and less than or equal to the second reference value G2, the rotation speed of the rear wheel 9 can be appropriately controlled.

The difference D1 between the second reference value G2 and the first reference value G1 is 100 rpm or more. Therefore, the second reference value G2 and the first reference value G1 have a relatively large difference. When the operation amount AP is the first operation amount AP1 and the speed V is the first speed V1, the torque of the electric motor 5 gradually decreases as the rotation speed R increases in the range larger than the first reference value G1 and less than or equal to the second reference value G2. Therefore, it is easier to maintain the comfort of the straddled electric vehicle 1. Accordingly, in the range where the rotation speed R is larger than the first reference value G1 and less than or equal to the second reference value G2, the rotation speed of the rear wheel 9 can be appropriately controlled.

When the operation amount AP is the first operation amount AP1, the speed V is the first speed V1, and the rotation speed R is larger than or equal to the second reference value G2, the torque command value T is the minimum value. Therefore, when the operation amount AP is the first operation amount AP1, the speed V is the first speed V1, and the rotation speed R is larger than or equal to the second reference value G2, the torque of the electric motor 5 is minimum. When the torque of the electric motor 5 is minimum, the rotation speed R of the rear wheel 9 is less likely to increase. For example, when the operation amount AP is the first operation amount AP1, the speed V is the first speed V1, and the rotation speed R is larger than or equal to the second reference value G2, the rotation speed of the rear wheel 9 does not become excessively high. Accordingly, when the operation amount AP is the first operation amount AP1, the speed V is the first speed V1, and the rotation speed R is larger than or equal to the second reference value G2, the rotation speed of the rear wheel 9 can be appropriately controlled.

When the operation amount AP is the first operation amount AP1, the speed V is the first speed V1, and the rotation speed R is larger than or equal to the second reference value G2, the torque command value T is less than zero. Therefore, when the operation amount AP is the first operation amount AP1, the speed V is the first speed V1, and the rotation speed R is larger than or equal to the second reference value G2, the torque of the electric motor 5 is less than zero. When the torque of the electric motor 5 is less than zero, the rotation speed of the rear wheel 9 is less likely to increase. For example, when the operation amount AP is the first operation amount AP1, the speed V is the first speed V1, and the rotation speed R is larger than or equal to the second reference value G2, the rotation speed of the rear wheel 9 decreases. Accordingly, when the operation amount AP is the first operation amount AP1, the speed V is the first speed V1, and the rotation speed R is larger than or equal to the second reference value G2, the rotation speed of the rear wheel 9 can be appropriately controlled.

In the information U, the torque command value T when the operation amount AP is the first operation amount AP1, the rotation speed R is the second rotation speed F2, and the speed V is the first speed V1 is set to the third torque command value T3. In the information U, the torque command value T when the operation amount AP is the first operation amount AP1, the rotation speed R is the second rotation speed F2, and the speed V is the second speed V2 is set to the fourth torque command value T4. The first speed V1 is less than the second speed V2. The third torque command value T3 is equal to the fourth torque command value T4. In the third state J3 described above, the controller 20 controls the electric motor 5 with the third torque command value T3. When the controller 20 controls the electric motor 5 with the third torque command value T3, the electric motor 5 outputs the third torque. In the fourth state J4 described above, the controller 20 controls the electric motor 5 with the fourth torque command value T4. When the controller 20 controls the electric motor 5 with the fourth torque command value T4, the electric motor 5 outputs the fourth torque. The first speed V1 is less than the second speed V2. The third torque command value T3 is equal to the fourth torque command value T4. Therefore, the third torque is equal to the fourth torque. Thus, in both the third state J3 and the fourth state J4, the rotation speed R of the electric motor 5 is relatively likely to increase. For example, the acceleration performance of the straddled electric vehicle 1 in the third state J3 is equal to the acceleration performance of the straddled electric vehicle 1 in the fourth state J4. Accordingly, the rotation speed of the rear wheel 9 can be appropriately controlled in either the third state J3 or the fourth state J4.

When the electric motor 5 rotates at the second rotation speed F2, the peripheral speed S of the rear wheel 9 is the second peripheral speed S2. The second rotation speed F2 is less than the first rotation speed F1. The difference between the second peripheral speed S2 and the first speed V1 is less than or equal to the threshold M. Therefore, the difference between the second peripheral speed S2 and the first speed V1 is relatively small. Thus, in the third state J3, it is presumed that the rear wheel 9 is properly in contact with the road surface. The third torque command value T3 is equal to the fourth torque command value T4. As described above, the acceleration performance of the straddled electric vehicle 1 in the third state J3 is equal to the acceleration performance of the straddled electric vehicle 1 in the fourth state J4. In the case where it is presumed that the rear wheel 9 is properly in contact with the road surface, the rotation speed R of the electric motor 5 is relatively likely to increase even when the speed V of the straddled electric vehicle 1 is small. Therefore, in the case where it is presumed that the rear wheel 9 appropriately contacts the road surface, it is easy to increase the speed V of the straddled electric vehicle 1. Accordingly, in the case where it is presumed that the rear wheel 9 is properly in contact with the road surface, it is easy to appropriately control the rotation speed of the rear wheel 9.

The controller 20 controls the torque of the electric motor 5 to the first torque when the operation amount AP is the first operation amount AP1, the rotation speed R is the first rotation speed F1, and the speed V is the first speed V1. The controller 20 controls the torque of the electric motor 5 to the second torque when the operation amount AP is the first operation amount AP1, the rotation speed R is the first rotation speed F1, and the speed V is the second speed V2. The first speed V1 is less than the second speed V2. The first torque is less than the second torque. Therefore, when the electric motor 5 outputs the first torque, the rotation speed R of the electric motor 5 is relatively less likely to increase. Thus, when the electric motor 5 outputs the first torque, the rotation speed of the rear wheel 9 does not become excessively high. Accordingly, when the electric motor 5 outputs the first torque, the rotation speed of the rear wheel 9 can be appropriately controlled. The second speed V2 is larger than the first speed V1. The second torque is larger than the first torque. Therefore, when the electric motor 5 outputs the second torque, the rotation speed R of the electric motor 5 is relatively likely to increase. Thus, when the electric motor 5 outputs the second torque, the straddled electric vehicle 1 smoothly accelerates. Accordingly, when the electric motor 5 outputs the second torque, the rotation speed of the rear wheel 9 can be appropriately controlled.

The first reference value G1 is less than the first rotation speed F1. When the operation amount AP is the first operation amount AP1 and the speed V is the first speed V1, the torque of the electric motor 5 decreases as the rotation speed R increases in the range larger than the first reference value G1. Therefore, when the operation amount AP is the first operation amount AP1 and the speed V is the first speed V1, the torque of the electric motor 5 gradually decreases as the rotation speed R increases in the range larger than the first reference value G1. For example, in a case where the rotation speed R is larger than the first reference value G1, the torque of the electric motor 5 changes relatively slowly. Therefore, it is easy to maintain the comfort of the straddled electric vehicle 1. Accordingly, in the case where the rotation speed R is larger than the first reference value G1, the rotation speed of the rear wheel 9 can be appropriately controlled.

The second reference value G2 is larger than the first reference value G1. When the operation amount AP is the first operation amount AP1 and the speed V is the first speed V1, the torque of the electric motor 5 decreases as the rotation speed R increases in the range larger than the first reference value G1 and less than or equal to the second reference value G2. Therefore, when the operation amount AP is the first operation amount AP1 and the speed V is the first speed V1, the torque of the electric motor 5 gradually decreases as the rotation speed R increases in the range larger than the first reference value G1 and less than or equal to the second reference value G2. Thus, the torque of the electric motor 5 changes relatively slowly. Therefore, it is easy to maintain the comfort of the straddled electric vehicle 1. Accordingly, in the range where the rotation speed R is larger than the first reference value G1 and less than or equal to the second reference value G2, the rotation speed of the rear wheel 9 can be appropriately controlled.

5. Modified Embodiments

The present invention is not limited to the above embodiment, and can be modified as follows.

(1) In the embodiment, when the operation amount AP is the first operation amount AP1, the speed V is the first speed V1, and the rotation speed R is larger than or equal to the second reference value G2, the torque command value T is less than zero. However, the present invention is not limited thereto. When an operation amount AP is a first operation amount AP1, a speed V is a first speed V1, and a rotation speed R is larger than or equal to a second reference value G2, a torque command value T may be zero. When torque of an electric motor 5 is zero, a rotation speed of a rear wheel 9 is less likely to increase. For example, when the operation amount AP is the first operation amount AP1, the speed V is the first speed V1, and the rotation speed R is larger than or equal to the second reference value G2, the rotation speed of the rear wheel 9 decreases. Accordingly, when the operation amount AP is the first operation amount AP1, the speed V is the first speed V1, and the rotation speed R is larger than or equal to the second reference value G2, the rotation speed of the rear wheel 9 can be appropriately controlled.

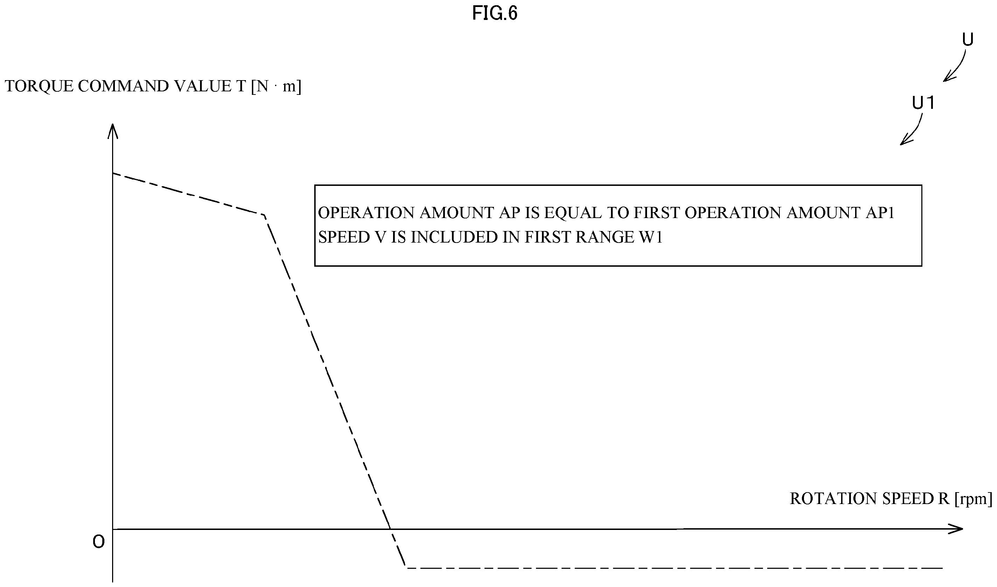

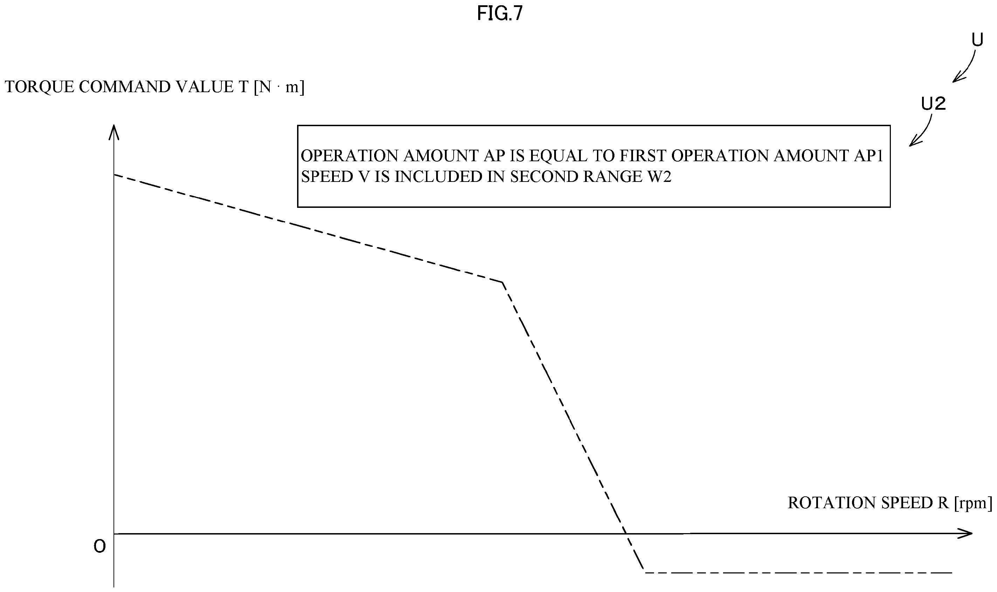

(2) For example, information U may include first information U1 and second information U2. Fig. 6 is a diagram indicating a configuration of the first information U1. Fig. 7 is a diagram indicating a configuration of the second information U2. The first information U1 defines a relationship between a rotation speed R of an electric motor 5 and a torque command value T when an operation amount AP is a first operation amount AP1 and a speed V is in a first range W1. The second information U2 defines a relationship between the rotation speed R of the electric motor 5 and the torque command value T when the operation amount AP is the first operation amount AP1 and the speed V is in a second range W2.

When the speed V of a straddled electric vehicle 1 is in the first range W1, a controller 20 selects the torque command value T using the first information U1 to control the electric motor 5. When the speed V of the straddled electric vehicle 1 is in the second range W2, the controller 20 selects the torque command value T using the second information U2 to control the electric motor 5.

The first range W1 and the second range W2 do not overlap. For example, the first range W1 and the second range W2 are continuous. The first range W1 is, for example, a range of 40 [km/h] or more and less than 50 [km/h]. The second range W2 is, for example, a range of 50 [km/h] or more and less than 60 [km/h].

The first information U1 is used when the speed V is in the first range W1. The second information U2 is used when the speed V is in the second range W2.

Therefore, it is easy to reduce the size of the information U. It is easy to reduce the capacity of the memory 21.

(3) In the embodiment, the difference D1 between the second reference value G2 and the first reference value G1 is 100 rpm or more. However, the present invention is not limited thereto. A difference D1 between a second reference value G2 and a first reference value G1 may be 300 rpm or more. The difference D1 between the second reference value G2 and the first reference value G1 may be 500 rpm or more. In addition, the difference D1 between the second reference value G2 and the first reference value G1 may be less than 100 rpm.

(4) In the embodiment, the unit of the torque command value T is, for example, $[N \cdot m]$. However, the present invention is not limited thereto. The unit of a torque command value T may be, for example, [%]. In this case, the torque command value T is indicated by a ratio of the torque command value T to the maximum value.

(5) In the embodiment, the electric motor 5 drives the rear wheel 9. However, the present invention is not limited thereto. An electric motor 5 may drive a front wheel 4. When the front wheel 4 is driven, the front wheel 4 corresponds to a drive wheel of the present invention. The electric motor 5 may drive the front wheel 4 and a rear wheel 9. When the front wheel 4 and the rear wheel 9 are driven, the front wheel 4 and the rear wheel 9 correspond to the drive wheel of the present invention.

(6) For example, a straddled electric vehicle 1 may be a vehicle including a plurality of front wheels 4. For example, the straddled electric vehicle 1 may be a vehicle including a plurality of rear wheels 9.

(7) In the embodiment, the off-road type vehicle is exemplified as the straddled electric vehicle 1. However, the present invention is not limited thereto. A straddled electric vehicle 1 may be changed to other types of vehicles such as a street type vehicle, a sports type vehicle, and an all-terrain vehicle.

(8) In the embodiment and each modified embodiment described in the above (1) to (7), each configuration may be appropriately changed by further replacing or combining each configuration with a configuration of another modified embodiment.

**Claims**

1.  A straddled electric vehicle (1) comprising:

    an electric motor (5);
    a drive wheel (9) driven by rotation of the electric motor (5);
    an accelerator position sensor (13) that detects an operation amount (AP) of an accelerator (7);
    a rotation sensor (15) that detects a rotation speed (R) of the electric motor (5);
    a speed sensor (14) that detects a speed (V) of the straddled electric vehicle (1); and
    a controller (20) that controls torque of the electric motor (5) based on the operation amount (AP) of the accelerator (7), the rotation speed (R) of the electric motor (5), and the speed (V) of the straddled electric vehicle (1).

2.  The straddled electric vehicle (1) according to claim 1, wherein

    the controller (20) includes
    a memory (21) that stores information (U) defining a relationship among the operation amount (AP) of the accelerator (7), the rotation speed (R) of the electric motor (5), the speed (V) of the straddled electric vehicle (1), and a torque command value (T).

3.  The straddled electric vehicle (1) according to claim 2, wherein

    the information (U) sets the torque command value (T) when the operation amount (AP) is a first operation amount (AP1), the rotation speed (R) is a first rotation speed (F1), and the speed (V) is a first speed (V1) to a first torque command value (T1),
    the information (U) sets the torque command value (T) when the operation amount (AP) is the first operation amount (AP1), the rotation speed (R) is the first rotation speed (F1), and the speed (V) is a second speed (V2) to a second torque command value (T2),
    the first speed (V1) is less than the second speed (V2), and
    the first torque command value (T1) is less than the second torque command value (T2).

4.  The straddled electric vehicle (1) according to claim 3, wherein

    when the electric motor (5) rotates at the first rotation speed (F1), a peripheral speed (S) of the drive wheel (9) is a first peripheral speed (S1), the first peripheral speed (S1) is larger than the first speed (V1), and
a difference between the first peripheral speed (S1) and the first speed (V1) is larger than a threshold (M).

5.  The straddled electric vehicle (1) according to claim 4, wherein
    a difference between the first peripheral speed (S1) and the second speed (V2) is less than or equal to the threshold (M).

6.  The straddled electric vehicle (1) according to claim 3, wherein

    a first reference value (G1) is less than the first rotation speed (F1), and
    when the operation amount (AP) is the first operation amount (AP1) and the speed (V) is the first speed (V1), the torque command value (T) decreases as the rotation speed (R) increases in a range larger than the first reference value (G1).

7.  The straddled electric vehicle (1) according to claim 6, wherein

    a second reference value (G2) is larger than the first reference value (G1), and
    when the operation amount (AP) is the first operation amount (AP1) and the speed (V) is the first speed (V1), the torque command value (T) decreases as the rotation speed (R) increases in a range larger than the first reference value (G1) and less than or equal to the second reference value (G2).

8.  The straddled electric vehicle (1) according to claim 7, wherein
    a difference (D1) between the second reference value (G2) and the first reference value (G1) is 100 rpm or more.

9.  The straddled electric vehicle (1) according to claim 7, wherein
    when the operation amount (AP) is the first operation amount (AP1), the speed (V) is the first speed (V1), and the rotation speed (R) is larger than or equal to the second reference value (G2), the torque command value (T) is a minimum value.

10. The straddled electric vehicle (1) according to claim 7, wherein
    when the operation amount (AP) is the first operation amount (AP1), the speed (V) is the first speed (V1), and the rotation speed (R) is larger than or equal to the second reference value (G2), the torque command value (T) is zero.

11. The straddled electric vehicle (1) according to claim 7, wherein
when the operation amount (AP) is the first operation amount (AP1), the speed (V) is the first speed (V1), and the rotation speed (R) is larger than or equal to the second reference value (G2), the torque command value (T) is less than zero.

12. The straddled electric vehicle (1) according to claim 2, wherein
the information (U) includes first information (U1) and second information (U2), the first information (U1) defines a relationship among the operation amount (AP) of the accelerator (7), the rotation speed (R) of the electric motor (5), and the torque command value (T), the second information (U2) defines a relationship among the operation amount (AP) of the accelerator (7), the rotation speed (R) of the electric motor (5), and the torque command value (T), when the speed (V) of the straddled electric vehicle (1) is in a first range (W1), the controller (20) selects the torque command value (T) using the first information (U1) to control the electric motor (5), and when the speed (V) of the straddled electric vehicle (1) is in a second range (W2), the controller (20) selects the torque command value (T) using the second information (U2) to control the electric motor (5).

13. The straddled electric vehicle (1) according to claim 1, wherein

the controller (20) controls the torque of the electric motor (5) to a first torque when the operation amount (AP) is a first operation amount (AP1), the rotation speed (R) is a first rotation speed (F1), and the speed (V) is a first speed (V1),
the controller (20) controls the torque of the electric motor (5) to a second torque when the operation amount (AP) is the first operation amount (AP1), the rotation speed (R) is the first rotation speed (F1), and the speed (V) is a second speed (V2),
the first speed (V1) is less than the second speed (V2), and
the first torque is less than the second torque.

14. The straddled electric vehicle (1) according to claim 13, wherein

a first reference value (G1) is less than the first rotation speed (F1), and
when the operation amount (AP) is the first operation amount (AP1) and the speed (V) is the first speed (V1), the torque of the electric motor (5) decreases as the rotation speed (R) increases in a range larger than the first reference value (G1).

15. The straddled electric vehicle (1) according to claim 14, wherein

a second reference value (G2) is larger than the first reference value (G1), and
when the operation amount (AP) is the first operation amount (AP1) and the speed (V) is the first speed (V1), the torque of the electric motor (5) decreases as the rotation speed (R) increases in a range larger than the first reference value (G1) and less than or equal to the second reference value (G2).

FIG.1

(UP) Z

Y

X (FRONT)

(DOWN)

(REAR)

1

4

3

6

7

2

2

11

5

8

10

9

## FIG.2

CONTROLLER 20

13 ACCELERATOR POSITION SENSOR

14 SPEED SENSOR

21 MEMORY

U INFORMATION

9 REAR WHEEL

5 ELECTRIC MOTOR

15 ROTATION SENSOR

1

EP 4 685 002 A1

FIG.3

TORQUE COMMAND VALUE T [N · m]

OPERATION AMOUNT AP = AP1

U

O

O

K1

K2

P1a

P2a

P1b

P2b

P1c

P2c

P1d

P2d

O

V1

V2

SPEED V [km/h]

ROTATION SPEED R [rpm]

EP 4 685 002 A1

# FIG.4

TORQUE COMMAND VALUE T [N · m]

SPEED V = V1

P1a

P1b

K1 (OPERATION AMOUNT AP = AP1)

P3a

K3 (OPERATION AMOUNT AP = AP2)

P3b

ROTATION SPEED R [rpm]

G2

O

P1c,P3c

P1d,P3d

# FIG.5

TORQUE COMMAND VALUE T [N · m]

OPERATION AMOUNT AP = AP1

U

ROTATION SPEED R [rpm]

P1a,P2a
J3,J4
K1L
P1b
K2L
K1 (SPEED V = V1)
J2
K2 (SPEED V = V2)
P2b
K1M
J1
K2M
G2
G4
F3
O
F2
G1
F1
G3
T3,T4
T2
T1
T5,T6
P1c
P2c
J5,J6
P1d,P2d
D1
D2

EP 4 685 002 A1

25

FIG.6

TORQUE COMMAND VALUE T [N · m]

OPERATION AMOUNT AP IS EQUAL TO FIRST OPERATION AMOUNT AP1
SPEED V IS INCLUDED IN FIRST RANGE W1

U

U1

O

ROTATION SPEED R [rpm]

EP 4 685 002 A1

FIG.7

TORQUE COMMAND VALUE T [N · m]

OPERATION AMOUNT AP IS EQUAL TO FIRST OPERATION AMOUNT AP1
SPEED V IS INCLUDED IN SECOND RANGE W2

U

U2

O

ROTATION SPEED R [rpm]

EP 4 685 002 A1

Europäisches
Patentamt

European
Patent Office

Office européen
des brevets

# EUROPEAN SEARCH REPORT

**Application Number**

EP 25 16 9057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 929 023 A1 (TAIWAN ABS TEST CENTER CO LTD [TW]) 29 December 2021 (2021-12-29) | 1-9, 12-15 | INV. B60L15/20 B60L3/10 |
| Y | * paragraphs [0001] - [0009]; figure 1 *  ----- | 10,11 | |
| Y | US 2018/015986 A1 (TANAKA HIROSHI [JP]) 18 January 2018 (2018-01-18) * paragraphs [0089], [0109], [0136] *  ----- | 10,11 | |
| X | US 2015/274020 A1 (MATSUDA YOSHIMOTO [JP]) 1 October 2015 (2015-10-01) * paragraphs [0074] - [0075], [0086] - [0087], [0096]; figures 1,6 *  ----- | 1-9, 12-15 | |
| X | WO 2023/188743 A1 (HONDA MOTOR CO LTD [JP]) 5 October 2023 (2023-10-05) * US 2025/214453 A1 for translation * & US 2025/214453 A1 (KITTAKA EIJI [JP] ET AL) 3 July 2025 (2025-07-03) * paragraph [0027]; figures 6,8 *  ----- | 1,2,12 | |

**TECHNICAL FIELDS SEARCHED (IPC)**

B60L

The present search report has been drawn up for all claims

| Place of search | Date of completion of the search | Examiner |
|---|---|---|
| The Hague | 24 September 2025 | Le Bihan, Thomas |

EPO FORM 1503 03.82 (P04C01)

## ANNEX TO THE EUROPEAN SEARCH REPORT
## ON EUROPEAN PATENT APPLICATION NO.

EP 25 16 9057

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2025

| Patent document cited in search report | | Publication date | Patent family member(s) | | Publication date |
|---|---|---|---|---|---|
| EP 3929023 | A1 | 29-12-2021 | NONE | | |
| US 2018015986 | A1 | 18-01-2018 | US | 2018015986 A1 | 18-01-2018 |
| | | | WO | 2016125789 A1 | 11-08-2016 |
| US 2015274020 | A1 | 01-10-2015 | EP | 2910401 A1 | 26-08-2015 |
| | | | JP | 6014159 B2 | 25-10-2016 |
| | | | JP | WO2014064729 A1 | 05-09-2016 |
| | | | US | 2015274020 A1 | 01-10-2015 |
| | | | WO | 2014064729 A1 | 01-05-2014 |
| WO 2023188743 | A1 | 05-10-2023 | CN | 118922329 A | 08-11-2024 |
| | | | DE | 112023000981 T5 | 12-12-2024 |
| | | | JP | WO2023188743 A1 | 05-10-2023 |
| | | | US | 2025214453 A1 | 03-07-2025 |
| | | | WO | 2023188743 A1 | 05-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012157013 A